# EUROPÄISCHE PATENTSCHRIFT

(11) **EP 1 955 895 B1**
(45) Veröffentlichungstag und Bekanntmachung des Hinweises auf die Patenterteilung: **25.05.2016**
(21) Anmeldenummer: 08157295.0
(22) Anmeldetag: 17.03.2004
(51) Int. Cl.: B60Q 1/26

(54) **Beleuchtungsvorrichtung für Fahrzeuge mit einem Leuchtdioden umfassenden Leuchtmodul**
Lighting device for a vehicle with a LED-modul
Dispositif d'éclairage avec un module DEL

(30) Priorität: 28.05.2003 DE 10324393; 15.07.2003 DE 10332127
(43) Veröffentlichungstag der Anmeldung: 13.08.2008
(62) Teilanmeldung aus: 04721145.3
(73) Patentinhaber: Volkswagen Aktiengesellschaft, 38440 Wolfsburg (DE)
(72) Erfinder: Müller, Michael, 38518 Gifhorn (DE); Müller, Klaus, 38518 Gifhorn (DE); Janßen, André, 38550 Isenbüttel (DE); Wegner, Berend, 38446 Wolfsburg (DE)
(74) Vertreter: Reitstötter Kinzebach

(56) Entgegenhaltungen:
- EP-A- 1 078 816
- DE-A1- 10 137 336
- DE-A1- 19 945 775
- US-A1- 2002 053 878

## Beschreibung

Die vorliegende Erfindung betrifft eine Beleuchtungsvorrichtung für Fahrzeuge mit einem ersten und einem zweiten Leuchtmodul, die Leuchtdioden umfassen, wobei das zweite Leuchtmodul das erste Leuchtmodul umgibt und wobei die Leuchtdioden der beiden Leuchtmodule auf getrennt voneinander vorgesehenen, in einer Ebene befindlichen Platinen befestigt sind .

Kraftfahrzeugleuchten, insbesondere Heckleuchten, die anstelle von Glühlampen oder Quarzlampen Leuchtdioden (LED: light emitting diode) als Leuchtmittel einsetzen, sind aus dem Stand der Technik hinlänglich bekannt. Nur beispielhaft sei auf die DE 33 15 785 A1, DE 39 16 875 A1, DE 39 30 214 A1 und DE 42 28 895 A1 verwiesen, die Kraftfahrzeug- bzw. Signalleuchten betreffen, welche Leuchtdioden als Leuchtmittel einsetzen.

Ferner ist aus der DE 100 52 655 A1 eine Beleuchtungsvorrichtung für Kraftfahrzeuge bekannt, bei der um die Projektionslinse eines Scheinwerfers eine mit Leuchtdioden bestückte Kreisringfläche angeordnet ist. Durch die auf der Ringfläche angeordneten Leuchtdioden können zusätzliche Signalleuchtflächen bereitgestellt werden. Sie können auch als Standlicht oder Blinklicht dienen. Das die Leuchtdioden umfassende Leuchtmodul umgibt somit die Abstrahlfläche des Projektionsscheinwerfers.

EP 1078 816 A2 beschreibt eine Beleuchtungsvorrichtung mit einem ersten Leuchtmodul bestehend aus einer einzelnen Leuchtdiode und einem zweiten Leuchtmodul bestehend aus mehreren Leuchtdioden. Auch in US 2002/0053878 A1 ist eine Anordnung von zwei Leuchtdiodengruppen beschrieben, bei der die eine Gruppe die andere umgibt.

Nachteilhaft an herkömmlichen Beleuchtungsvorrichtungen, die als Lichtquelle nur Leuchtdioden umfassen, ist, dass bei einem Defekt der Austausch des Leuchtmoduls teuer ist. Ferner sind die verschiedenen Lichtfunktionen der einzelnen Leuchtmodule nur schwer unterscheidbar.

Es ist daher die Aufgabe der vorliegenden Erfindung, eine Beleuchtungsvorrichtung der Eingangs genannten Art zu schaffen, deren Bauraumbedarf geringer und die Herstellungskosten für die Bereitstellung der Leuchtmodule für die Schlusslicht- und Bremsfunktion geringer sind.
Erfindungsgemäß wird diese Aufgabe durch eine Beleuchtungsvorrichtung mit den Merkmalen des Anspruchs 1 gelöst. Vorteilhafte Aus- und Weiterbildungen ergeben sich aus den Unteransprüchen.

Die erfindungsgemäße Beleuchtungsvorrichtung ist dadurch gekennzeichnet, dass die Leuchtmodule jeweils eine Vielzahl von Leuchtdioden umfassen und dass zur Bereitstellung einer Schlusslichtfunktion die Leuchtdioden sowohl des ersten als auch des zweiten Leuchtmoduls so ansteuerbar sind, dass sie mit einer Leuchtkraft in einem Bereich von 5 % bis 20 % der maximalen Leuchtkraft der Leuchtdioden leuchten und zur Bereitstellung einer Bremslichtfunktion die Leuchtdioden des ersten Leuchtmoduls so ansteuerbar sind, dass sie mit einer Leuchtkraft in einem Bereich von 60 % bis einschließlich 100 % der maximalen Leuchtkraft der Leuchtdioden leuchten.
Da die Leuchtmodule getrennt voneinander befestigt sind, können sie auch einzeln ausgetauscht werden. Dies verringert die Kosten bei einem Defekt bei einem der Leuchtmodule und der zur Behebung des Defekts erforderliche Austausch dieses Leuchtmoduls. Beispielsweise kann das zweite Leuchtmodul von einem das erste Leuchtmodul umgebenden Ring gebildet sein. Dieser Ring ist insbesondere als Kreisring ausgebildet. Gemäß einer bevorzugten Weiterbildung der erfindungsgemäßen Beleuchtungsvorrichtung ist bzw. sind das erste Leuchtmodul und/oder das zweite Leuchtmodul mittels einer Clip-, Rast- oder Steckverbindung an einem Aufnahmeteil befestigt. Durch eine solche Clip-, Steck- und/oder Rastverbindung können die Leuchtmodule sehr einfach und schnell ausgetauscht werden. Sie lassen sich z. B. auf gleiche Weise wie Glühbirnen austauschen, die bislang in herkömmlichen Beleuchtungsvorrichtungen von Fahrzeugen verwendet werden. Ferner können die Leuchtmodule mittels einer Schraubverbindung an dem Aufnahmeteil befestigt sein. Die Leuchtmodule können somit als Standardbauteil ausgeführt werden, das bei verschiedenen Fahrzeugen, die ein einheitliches Grunddesign der Beleuchtungseinrichtungen aufweisen, eingesetzt werden kann.

Das äußere Erscheinungsbild der Beleuchtungsvorrichtung wird ganz wesentlich von dem Design einer oder mehrerer Zwischenscheiben geprägt, die zwischen den Leuchtmodulen und einer vorzugsweise in Klarglasoptik ausgebildeten Abschlussscheibe angeordnet ist bzw. sind. Bei der Zwischenscheibe oder den Zwischenscheiben wird die von außen sichtbare Abstrahlfläche der jeweiligen Leuchtmodule gebildet. Sie wird von außen als im Wesentlichen homogene Lichtfläche wahrgenommen. Gemäß einer bevorzugten Ausgestaltung ist diese in Abstrahlrichtung der Beleuchtungseinrichtung angeordnete Zwischenscheibe so ausgebildet, dass der Lichtemission des von der ersten Lichtquelle emittierten Lichts eine Spinnennetzoptik verliehen wird. Hierdurch kann eine besonders homogene Abstrahlung erzielt werden.

Gemäß einer weiteren bevorzugten Ausgestaltung ist jeder Leuchtdiode ein Reflektor zugeordnet. Die Reflektoren des Leuchtmoduls füllen dieses so aus, dass sich keine lichttechnischen Totflächen ergeben. Auf diese Weise wird der Raumbedarf des jeweiligen Leuchtmoduls lichttechnisch optimal ausgenutzt. Des Weiteren wird hierdurch das Erscheinungsbild des jeweiligen Leuchtmoduls verbessert.

Gemäß einer bevorzugten Weiterbildung sind die Leuchtdioden des zweiten Leuchtmoduls so genannte Duo-Leuchtdioden. Bei solchen Duo-Leuchtdioden sind zwei Leuchtdioden in einer Einheit untergebracht. Sie können daher in einer ersten und/oder einer zweiten Farbe leuchten. Zur Bereitstellung eines Fahrtrichtungsanzeigers leuchten die Leuchtdioden des zweiten Leuchtmoduls in einer Farbe, die sie von der Farbe für die Bereitstellung der Schlusslichtfunktion und der Bremslichtfunktion unterscheidet.

Die Erfindung wird nun anhand von Ausführungsbeispielen mit Bezug zu den Zeichnungen erläutert.
Fig. 1 zeigt ein Beispiel für eine Beleuchtungsvorrichtung,
Fig. 2 zeigt schematisch eine Ausgestaltung der Beleuchtungsvorrichtung in einem Querschnitt,
Fig. 3 zeigt die in Fig. 2 gezeigte Ausgestaltung in einem Längsschnitt,
Fig. 4 zeigt eine Ausgestaltung der erfindungsgemäßen Beleuchtungsvorrichtung,
Fig. 5 zeigt eine weitere Ausgestaltung der erfindungsgemäßen Beleuchtungsvorrichtung,
Fig. 6 zeigt eine Ausgestaltung des Leuchtmoduls 1 nach dem Stand der Technik,
Fig. 7 zeigt eine Ausgestaltung des Leuchtmoduls 1 gemäß der Erfindung,
Fig. 8 zeigt ein weiteres Beispiel einer Beleuchtungsvorrichtung,
Fig. 9 zeigt einen Schnitt durch das in Fig. 8 gezeigte Beispiel entlang der Linie A-A,
Fig. 10 zeigt einen Schnitt durch das in Fig. 8 gezeigte Beispiel entlang der Linie B-B,
Fig. 11 zeigt einen Schnitt durch das in Fig. 8 gezeigte Beispiel entlang der Linie C-C,
Fig. 12 zeigt einen Schnitt durch das in Fig. 8 gezeigte Beispiel entlang der Linie D-D,

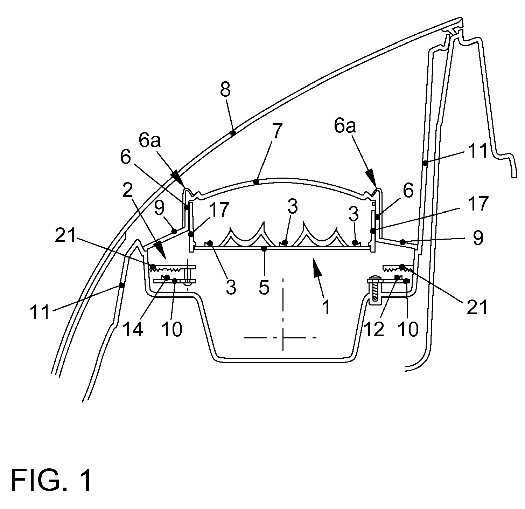

Der prinzipielle Aufbau einer Beleuchtungsvorrichtung wird mit Bezug zu Fig. 1 erläutert. Die Beleuchtungsvorrichtung dieses Beispiels stellt ein Schluss-/Bremslicht sowie als Fahrtrichtungsanzeiger ein Blinklicht bereit. Die Beleuchtungsvorrichtung umfasst ein erstes Leuchtmodul 1 und ein zweites Leuchtmodul 2.

Das Leuchtmodul 1 umfasst mehrere Leuchtdioden 3, eine Platine 5, auf welcher die Leuchtdioden 3 befestigt sind, und Reflektorflächen 18, welche das von den Leuchtdioden 3 emittierte Licht in Abstrahlrichtung der Beleuchtungsvorrichtung reflektieren. Auf der Platine 5 sind Leiterbahnen vorgesehen, welche die Anschlüsse der Leuchtdioden 3 mit Strom versorgen und diese ansteuern. Außerdem ist die Vorschaltelektronik für die Leuchtdioden auf dieser Platine 5 vorgesehen. In dem gezeigten Beispiel sind insgesamt 16 rote Leuchtdioden auf der Platine 5 befestigt. Die Platine 5 ist kreisrund. Es handelt sich um eine Standardplatine, die bei mehreren Fahrzeugen mit einheitlichem Grunddesign eingesetzt werden kann..

Die Befestigung des ersten Leuchtmoduls 1 in der Beleuchtungsvorrichtung erfolgt über eine Steck-, Clip- und/oder Rastverbindung an einer Aufnahme 6. In dem in Fig. 1 gezeigten Beispiel ist die Platine 5 an ihrem Rand mit einem Gehäuseelement 17 verbunden. Über dieses Gehäuseelement 17 erfolgt die Befestigung des ersten Leuchtmoduls 1 an der Aufnahme 6. Es ist mit der Aufnahme 6 verrastet. Es sind jedoch auch andere lösbare Verbindungen zwischen dem Gehäuseelement 17 bzw. der Platine 5 und der Aufnahme 6 möglich. Die Verbindung zwischen dem Leuchtmodul 1 und der Aufnahme 6 sollte ein einfaches Herausnehmen und Einsetzen des Leuchtmoduls 1, wie z. B. bei herkömmlichen Glühlampen, ermöglichen. Die Aufnahme 6 ist im gezeigten Beispiel ein Teil der Zwischenlichtscheibe 7. Das Leuchtmodul 1 ist somit mit der Zwischenlichtscheibe 7 verrastet.

Die elektrische Anbindung der Platine 5 kann entweder über die Steck-, Clip- und/oder Rastverbindung zwischen dem Leuchtmodul 1 und der Aufnahme 6 erfolgen oder separat davon. Im gezeigten Beispiel dient die Verbindung zwischen dem Gehäuse 17 des Leuchtmoduls 1 und der Aufnahme 6 nur der mechanischen Befestigung des Leuchtmoduls 1 und die elektrische Anbindung der Platine erfolgt über separate Zuleitungen.

Das zweite Leuchtmodul 2 ist für einen als oranges Blinklicht ausgebildeten Fahrtrichtungsanzeiger ausgestaltet. Als Lichtquellen dienen mehrere Leuchtdioden 14. Sie sind auf einer Platine 10 montiert. Auf der Platine 10 sind insgesamt 24 Leuchtdioden in der Farbe Gelb oder in der Farbe Rot befestigt. Die Platine 10 kann entweder auch mittels einer Steck-, Clip- und/oder Rastverbindung an einer Aufnahme, wie z.B. dem Gehäuse 11 der Beleuchtungsvorrichtung, befestigt sein. Andererseits kann die Platine 10 auch an das Gehäuse 11 angeschraubt sein.

In Abstrahlrichtung der Leuchtdioden 14 ist eine Zwischenlichtscheibe 9 angeordnet, die in Klarglasoptik ausgeführt ist. Die Zwischenscheibe 9 ist zwischen einem Gehäuse 11 der Beleuchtungsvorrichtung bzw. dem Reflektor 19 einerseits und der Aufnahme 6 für das erste Leuchtmodul 1 andererseits vorgesehen. Sie bildet einen Kreisring, der das erste Leuchtmodul 1 umgibt. Sie geht direkt in die Aufnahme 6 und schließlich in die Zwischenscheibe 7 für das erste Leuchtmodul 1 über. Die Zwischenscheibe 9, die Aufnahme 6 und die Zwischenscheibe 7 können somit einstückig ausgebildet sein. Im Bereich der Aufnahme 6 kann eine Metallschicht 6a, z.B. durch Bedampfung, aufgebracht sein. Es kann beispielsweise Chrom aufgedampft werden. Diese Metallschicht grenzt die Zwischenscheibe 9 optisch von der Zwischenscheibe 7 ab.

Zwischen der Zwischenlichtscheibe 9 und den Leuchtdioden 14 ist ferner wahlweise noch eine weitere Zwischenscheibe 21 vorgesehen sein, mit welcher der Lichtaustritt des von den Leuchtdioden 14 emittierten Lichts beeinflusst werden kann.

Zwischen der Platine 5 des ersten Leuchtmoduls 1 und der Platine 10 des zweiten Leuchtmoduls 2 ist eine gestufte Anordnung vorgesehen. Die ringförmige Platine 10 befindet sich hinsichtlich der Abstrahlrichtung hinter der Platine 5, in radialer Richtung befindet sich die Platine 10 seitlich von der Platine 5, d.h. sie umgibt das Leuchtmodul 1.

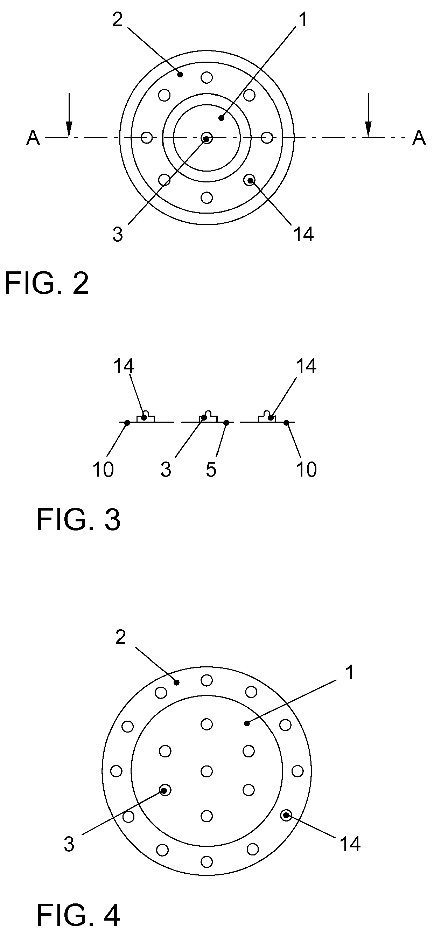

In den Fig. 2 bis 5 sind weitere mögliche Ausgestaltungen gezeigt, die in Verbindung mit dem zuvor beschriebenen Beispiel realisiert werden können. Die Fig. 2 und 3 zeigen eine Ausbildung, bei der das innenliegende Leuchtmodul 1 als Fahrtrichtungsanzeiger ein Blinklicht bereitstellt und das dieses Leuchtmodul 1 umgebende zweite Leuchtmodul 2 ein Brems- und Schlusslicht bereitstellt. Die acht Leuchtdioden 14 des Leuchtmoduls 2 sind rot, die Leuchtdiode 3 des Leuchtmoduls 1 ist gelb. Sie sind auf getrennt voneinander vorgesehenen Platinen 5 und 10 befestigt. Diese befinden sich jedoch in einer Ebene. Der Durchmesser der Beleuchtungsvorrichtung ist in diesem Fall kompatibel mit herkömmlichen Beleuchtungsvorrichtungen für Fahrzeuge, so dass die Beleuchtungsvorrichtung beispielweise in ein Hecklicht eines Fahrzeugs ohne Veränderung der Aufnahmen eingebaut werden kann. Bei den Platinen 5 und 10 handelt es sich um Standardplatinen, die in mehreren Fahrzeugen eingesetzt werden können, wenn das Grunddesign dieser Fahrzeuge vereinheitlicht wurde. Dabei sind die Platinen 5 und 10 durch eine Steckund/oder Rastverbindung wie herkömmliche Glühlampen austauschbar.

Fig. 4 zeigt eine erfindungsgemäße Ausgestaltung, bei der das erste innenliegende Leuchtmodul 1 das Brems- und Schlusslicht bereitstellt und der außenliegende Ring des Leuchtmoduls 2 als Fahrtrichtungsanzeiger ein Blinklicht. Auch hier sind alle Lichtquellen Leuchtdioden. Die Ansteuerung der Leuchtdioden erfolgt dabei so, dass die Lichtintensität des Schlusslichts 5 % ist und des Bremslichts 60 % oder, wenn eine Nebelschlussleuchte angeschaltet ist, 90 %.

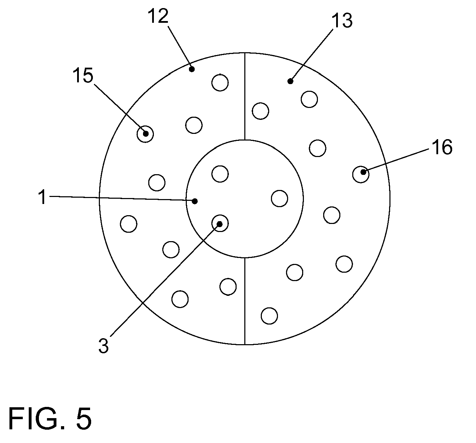

In Fig. 5 ist eine weitere erfindungsgemäße Ausgestaltung gezeigt, bei der das Leuchtmodul 2 geteilt ist und verschiedene Leuchtfunktionen bereitstellt. Zum einen kann es im Bereich 12 ein Schluss- und Bremslicht bereitstellen und zum anderen im Bereich 13 eine Nebelschlussleuchte. Für das Schluss- und Bremslicht sind die Leuchtdioden 15 vorgesehen und für die Nebelschlussleuchten die Leuchtdioden 16. Alle Leuchtdioden sind in roter Farbe ausgeführt, sie werden jedoch je nach ihrer Lichtfunktion getrennt angesteuert. Die mittleren drei Leuchtdioden 3 der in Fig. 5 gezeigten Ausbildung sind gelbe Leuchtdioden für das Blinklicht des Fahrtrichtungsanzeigers.

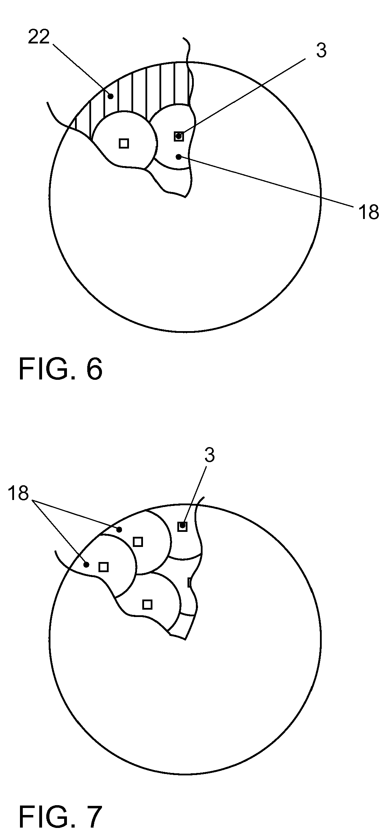

Anhand der Fig. 6 und 7 wird eine weitere Ausgestaltung eines Leuchtmoduls, das Leuchtdioden aufweist, erläutert. Dabei zeigt die Fig. 6 eine Aufsicht auf ein bekanntes Leuchtmodul und die Fig. 7 die erfindungsgemäße Ausgestaltung des Leuchtmoduls. Diese erfindungsgemäße Ausgestaltung kann in Verbindung mit den zuvor erläuterten Ausführungsbeispielen, insbesondere bei dem Leuchtmodul 1, verwendet werden. Jeder Leuchtdiode 3 sind Reflektoren 18 zugeordnet. Diese Reflektoren 18 sind in Aufsicht im Wesentlichen kreisförmig. Damit die Fläche des Leuchtmoduls möglichst gut ausgefüllt wird, sind die Reflektoren 18 zum Teil ausgeschnitten. Bei bekannten Leuchtmodulen dieser Art ergibt sich im Randbereich des Leuchtmoduls eine lichttechnische Totfläche 22. Bei der erfindungsgemäßen Ausgestaltung des Leuchtmoduls wird diese lichttechnische Totfläche 22 vermieden. Die Reflektoren 18 füllen das Leuchtmodul 1 vollständig aus. Hierzu sind im Randbereich des beispielsweise scheibenförmigen Leuchtmoduls 1 die Reflektoren 18 entsprechend ausgeschnitten.

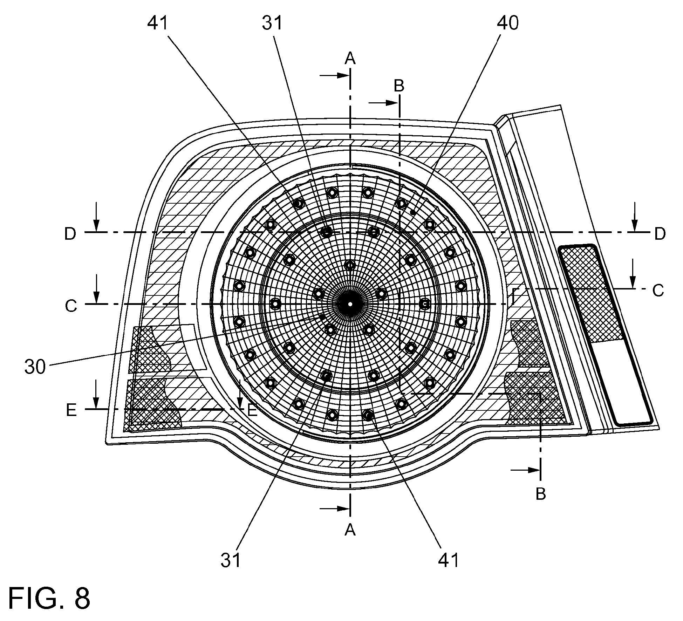

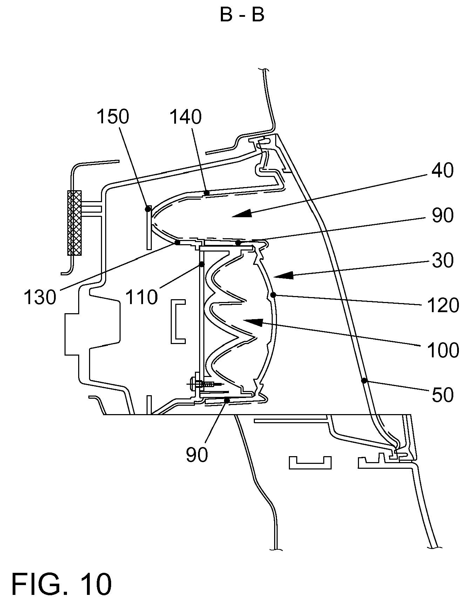

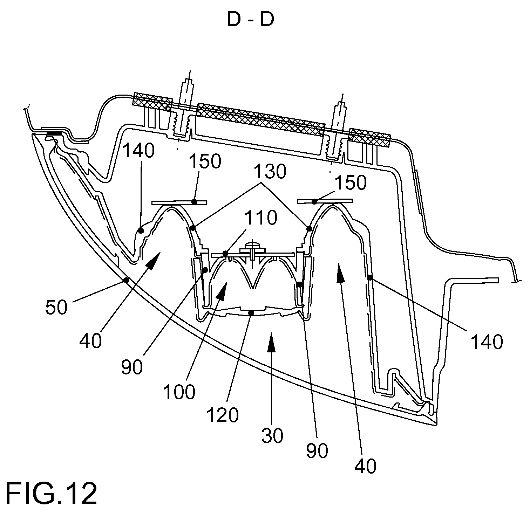

Die Fig. 8 bis 12 zeigen ein weiteres Beispiel einer Beleuchtungsvorrichtung in einer Ansicht von außen und verschiedenen Schnittansichten.

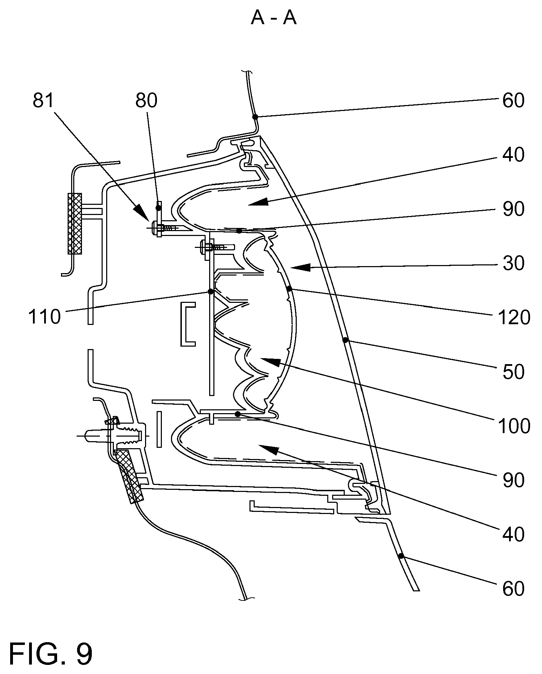

Der grundsätzliche Aufbau der Beleuchtungsvorrichtung ist wie folgt:
Im Inneren der Beleuchtungsvorrichtung ist ein erstes Leuchtmodul 30 vorgesehen, das insgesamt 15 Leuchtdioden, die auf zwei konzentrischen Ringen angeordnet sind, umfasst. Der Aufbau dieses ersten Leuchtmoduls 30 ist im Wesentlichen zylindrisch, wobei die Zylinderwand hervorsteht und die Leuchtdioden 31 mit ihren Reflektoren im Inneren des Zylinders untergebracht sind. Das erste Leuchtmodul 30 wird von einem zweiten Leuchtmodul 40 umgeben, das die Leuchtdioden 41 umfasst. Es sind insgesamt 20 Leuchtdioden auf einem Kreisring angeordnet. Das zweite Leuchtmodul 40 ist gestuft zu dem ersten Leuchtmodul 30 angeordnet. In Abstrahlrichtung der Beleuchtungsvorrichtung ist das zweite Leuchtmodul 40 zurückgesetzt angeordnet. Beide Leuchtmodule 30 und 40 sind getrennt voneinander an einer oder mehreren Aufnahmen befestigt. Sie sind daher einzeln austauschbar.
Im Folgenden wird die Beleuchtungsvorrichtung detaillierter mit Bezug zu den Schnittdarstellungen der Fig. 9 bis 12 erläutert.

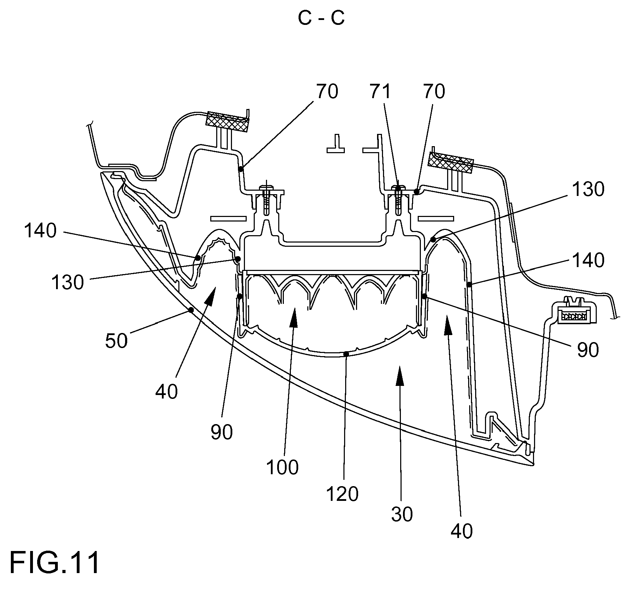

Die Beleuchtungsvorrichtung wird nach außen durch eine Lichtscheibe 50 abgeschlossen, die vorzugsweise in Klarglasoptik ausgeführt ist. Die Lichtscheibe 50 grenzt an Karosserieteile 60 an. Im Inneren der Aufnahmeöffnung für die Beleuchtungsvorrichtung ist die Aufnahme 70 (vgl. Fig. 11) für die Befestigung des ersten Leuchtmoduls 30 vorgesehen. Für die Befestigung des zweiten Leuchtmoduls 40 ist die Aufnahme 80 (vgl. Fig. 9) vorgesehen. Die Leuchtmodule 30 und 40 werden mittels der Schrauben 71 und 81 an diesen Aufnahmen 70 und 80 befestigt.

Das erste Leuchtmodul 30 weist eine seitliche zylindrische Wand 90 auf. Innerhalb dieser Begrenzung 90 befinden sich wabenförmige Reflektorflächen 100, in deren Waben jeweils die Leuchtdioden 31 angeordnet sind. Die Reflektorflächen 100 bestehen aus einer Basis beispielsweise aus Kunststoff, die mit einer reflektierenden Schicht, z. B. aus Aluminium oder Chrom, bedampft ist. Die Leuchtdioden 31 sind auf einer ersten Platine 110 befestigt, die innerhalb der zylindrischen Wand 90 hinter den Reflektorflächen 100 angeordnet ist. Bei den Befestigungsstellen für die Leuchtdioden 31 weisen die Reflektorflächen 100 jeweils Öffnungen auf. In Abstrahlrichtung der Leuchtdioden 31 ist an der zylindrischen Wand 90 eine Zwischenlichtscheibe 120 vorgesehen.

Das zweite Leuchtmodul 40 umgibt das erste Leuchtmodul 30 konzentrisch. Dabei ist es optisch zurückgesetzt hinter dem ersten Leuchtmodul 30 angeordnet. Es umfasst eine innere Reflektorfläche 130, die im Wesentlichen die zylindrische Wand 90 des ersten Leuchtmoduls 30 in Abstrahlrichtung der Beleuchtungsvorrichtung nach hinten (entgegen der Abstrahlrichtung) fortsetzt. Am Ende biegt sich diese Reflektorwand 130 radial nach außen, bis zu der Stelle, an der die Leuchtdiode 41 des zweiten Leuchtmoduls 40 befestigt ist. An der radial äußeren Seite besitzt des zweite Leuchtmodul 40 eine Reflektorfläche 140, die sich im Wesentlichen so weit wie die zylindrische Wand 90 nach vorne erstreckt. Die Reflektorflächen 130 und 140 des zweiten Leuchtmoduls 40 bilden auch wabenförmige Vertiefungen für die Leuchtdioden 41. Sie sind auch auf einer ringförmigen zweiten Platine 150 befestigt. Dabei sind die Leuchtdioden 41 in Abstrahlrichtung hinter den Leuchtdioden 31 angeordnet. Ferner umgeben die Leuchtdioden 41 die Leuchtdioden 31 konzentrisch.

Die beiden Leuchtmodule 30 und 40 sind ineinander gesteckt. Sie lassen sich separat voneinander austauschen. Um das erste Leuchtmodul 30 herauszunehmen, müssen nur die Schrauben 71 gelöst werden. Das Leuchtmodul 30 kann dann herausgezogen werden. Um das Leuchtmodul 40 auszutauschen, müssen nur die Schrauben 81 gelöst werden.

Für die Ansteuerung der Leuchtdioden 31 und 41 sind ein oder zwei Steuergeräte vorgesehen, die mit den Platinen 110 und 150 verbunden sind. Die Steuergeräte können entweder direkt auf den Platinen 110 bzw. 150 vorgesehen sein oder separat befestigt sein und elektrisch mit den Platinen 110 und 150 verbunden sein. Steuergeräte steuern die Leuchtdioden 31 und 41 so an, dass beispielsweise folgende Lichtfunktionen bereitgestellt werden können:
Für die Schlusslichtfunktion werden die Leuchtdioden 41 des zweiten Leuchtmoduls 40 angesteuert. Für die Schlusslichtfunktion leuchten sie jedoch mit verminderter Leuchtkraft. Falls die maximale Leuchtkraft 100 % ist, ist die Leuchtkraft für die Schlusslichtfunktion in einem Bereich von 5 % bis 20 %. Bevorzugt ist ein Bereich von 10 % bis 20%. Bei einer anderen Ausgestaltung leuchten für die Schlusslichtfunktion zusätzlich die Leuchtdioden 31 des ersten Leuchtmoduls 30 mit der gleichen verringerten Leuchtkraft wie die Leuchtdioden 41 des zweiten Leuchtmoduls 40.
Für die Bremslichtfunktion werden die Leuchtdioden 31 des ersten Leuchtmoduls 30 so angesteuert, dass sie mit erhöhter Leuchtkraft leuchten. Beispielsweise leuchten sie mit einer Leuchtkraft in einem Bereich von 60 % bis 100 %. Bevorzugt leuchten die Leuchtdioden 31 für die Bremslichtfunktion mit maximaler Leuchtkraft, d.h. mit 100 %.

Um mit der Beleuchtungsvorrichtung auch einen Fahrtrichtungsanzeiger bereit zu stellen, können die Leuchtdioden 41 des zweiten Leuchtmoduls 41 als Duo-Leuchtdioden ausgeführt sind. In solchen Duo-Leuchtdioden sind zwei Leuchtdioden integriert, die mit zwei verschiedenen Farben leuchten können. Beispielsweise kann eine solche Duo-Leuchtdiode in rot und/oder orange leuchten. Für die Bereitstellung des Fahrtrichtungsanzeigers werden die Duo-Leuchtdioden so angesteuert, dass sie blinken und oranges Licht emittieren.

Als Leuchtdioden für das Schluss-/Bremslicht sowie für das Blinklicht können solche vom Typ Power-TopLED der Fa. Osram Optosemiconductors verwendet werden. Die Anzahl der in den Ausführungsbeispielen verwendeten Leuchtdioden ist beispielhaft. Sie kann je nach Lichtfunktion und Lichtintensität der verwendeten Leuchtdioden variieren. Ferner können Leuchtdioden des Typs Super-Flux-LED der Fa. LumiLED verwendet werden. Die Anzahl, der in den Ausführungsbeispielen verwendeten Leuchtdioden ist beispielhaft. Sie kann je nach Lichtfunktion und Lichtintensität der verwendeten Leuchtdioden variieren. Alle Leuchtdioden erhalten zur Strombegrenzung eine Beschaltung mit Vorwiderständen sowie eine Diode zum Schutz gegen Verpolung und negative Spannungsspitzen. Eine Dimmung der Leuchtdioden für einen Wechsel vom Bremslicht auf Schlusslicht wird durch Taktung aus dem Hecksteuergerät realisiert.

Schließlich wird darauf hingewiesen, dass durch die zuvor beschriebenen Beleuchtungsvorrichtungen noch weitere Aufteilungen von Lichtfunktionen bereitgestellt werden können. Beispielweise kann das erste Leuchtmodul einen Rückfahrscheinwerfer bereitstellen und das zweite Leuchtmodul eine Nebelschlussleuchte. Ferner kann das erste Leuchtmodul ein Rückfahrscheinwerfer sein und das zweite Leuchtmodul ein Schluss/Bremslicht. Schließlich kann das erste Leuchtmodul sowohl einen Rückfahrscheinwerfer als auch eine Nebelschlussleuchte und das zweite Leuchtmodul das Schluss-/Bremslicht bereitstellen.

## Patentansprüche

1. Beleuchtungsvorrichtung für Fahrzeuge mit einem ersten Leuchtmodul (1) und einem zweiten Leuchtmodul (2), die Leuchtdioden (3, 14) umfassen, wobei das zweite Leuchtmodul (2) das erste Leuchtmodul (1) umgibt und wobei die Leuchtdioden (3, 14) der beiden Leuchtmodule (1, 2) auf getrennt voneinander vorgesehenen Platinen (5, 10) befestigt sind, die sich in einer Ebene befinden,
**dadurch gekennzeichnet,**
- **dass** das erste Leuchtmodul (1) und das zweite Leuchtmodul (2) jeweils eine Vielzahl von Leuchtdioden (3, 14) umfassen,
- **dass** zur Bereitstellung einer Schlusslichtfunktion die Leuchtdioden sowohl des ersten als auch des zweiten Leuchtmoduls so ansteuerbar sind, dass sie mit einer Leuchtkraft in einem Bereich von 5 % bis 20 % der maximalen Leuchtkraft der Leuchtdioden leuchten, und
- **dass** zur Bereitstellung einer Bremslichtfunktion die Leuchtdioden des ersten Leuchtmoduls so ansteuerbar sind, dass sie mit einer Leuchtkraft in einem Bereich von 60 % bis einschließlich 100 % der maximalen Leuchtkraft der Leuchtdioden leuchten.

2. Beleuchtungsvorrichtung nach Anspruch 1,
**dadurch gekennzeichnet,**
**dass** das zweite Leuchtmodul (2) von einem das erste Leuchtmodul (1) umgebenden Ring gebildet ist.

3. Beleuchtungsvorrichtung nach einem der vorstehenden Ansprüche,
**dadurch gekennzeichnet,**
**dass** jeder Leuchtdiode (3, 14) ein Reflektor zugeordnet ist und dass die Reflektoren des Leuchtmoduls (1, 2) dieses so ausfüllen, dass sich keine lichttechnischen Totflächen (22) ergeben.

4. Beleuchtungsvorrichtung nach einem der vorstehenden Ansprüche,
**dadurch gekennzeichnet,**
**dass** zweite Leuchtmodul (2) als Fahrtrichtungsanzeiger ein Blinklicht bereitstellt, wobei die Leuchtdioden (14) des ersten und zweiten Leuchtmoduls (1, 2) so ansteuerbar sind, dass die Lichtintensität des Schlusslichts 5 % und des Bremslichts 60 % oder, wenn eine Nebelschlussleuchte angeschaltet ist, 90 % der maximalen Leuchtkraft der Leuchtdioden ist.

5. Beleuchtungsvorrichtung nach einem der vorstehenden Ansprüche,
**dadurch gekennzeichnet,**
**dass** das zweite Leuchtmodul (2) geteilt ist und verschiedene Leuchtfunktionen bereitstellt.

6. Beleuchtungsvorrichtung nach Anspruch 5,
**dadurch gekennzeichnet,**
**dass** das zweite Leuchtmodul (2) in einem Bereich (12) ein Schluss- und Bremslicht bereitstellen und in einem anderen Bereich (13) eine Nebelschlussleuchte.

## Claims

1. Lighting device for vehicles having a first lighting module (1) and a second lighting module (2) which comprise light-emitting diodes (3, 14), wherein the second lighting module (2) surrounds the first lighting module (1), and wherein the light-emitting diodes (3, 14) of the two lighting modules (1, 2) are attached to circuit boards (5, 10) which are provided separately from one another and which are located in a plane,
**characterized in that**
- the first lighting module (1) and the second lighting module (2) each comprise a multiplicity of light-emitting diodes (3, 14),
- **in that** in order to make available a tail light function the light-emitting diodes both of the first lighting module and the second light module can be actuated in such a way that they illuminate with a luminosity in a range from 5% to 20% of the maximum luminosity of the light-emitting diodes, and
- **in that** in order to make available a brake light function the light-emitting diodes of the first lighting module can be actuated in such a way that they illuminate with a luminosity in a range from 60% to including 100% of the maximum luminosity of the light-emitting diodes.

2. Lighting device according to Claim 1,
**characterized**
**in that** the second lighting module (2) is formed by a ring surrounding the first lighting module (1).

3. Lighting device according to one of the preceding claims,
**characterized**
**in that** each light-emitting diode (3, 14) is assigned a reflector, and in that the reflectors of the lighting module (1, 2) fill the latter in such a way that they do not result in any dead areas (22) in terms of lighting technology.

4. Lighting device according to one of the preceding claims,
**characterized**
**in that** the second lighting module (2) makes available a flashing light as a travel direction indicator, wherein the light-emitting diodes (14) of the first and second lighting modules (1, 2) can be actuated in such a way that the lighting intensity of the tail light is 5%, and of the brake light 60% or, if a fog light is switched on, is 90% of the maximum luminosity of the light-emitting diodes.

5. Lighting device according to one of the preceding claims,
**characterized**
**in that** the second lighting module (2) is divided and makes available various lighting functions.

6. Lighting device according to Claim 5, **Characterized**
**in that** the second lighting module (2) makes available a tail light and a brake light in one zone (12), and a fog light in another zone (13).

## Revendications

1. Dispositif d'éclairage pour véhicules comprenant un premier module lumineux (1) et un deuxième module lumineux (2), lesquels comprennent des diodes électroluminescentes (3, 14), le deuxième module lumineux (2) entourant le premier module lumineux (1) et les diodes électroluminescentes (3, 14) des deux modules lumineux (1, 2) étant fixées sur des platines (5, 10) conçues séparément l'une de l'autre qui se trouvent dans un plan,
**caractérisé en ce**
- **que** le premier module lumineux (1) et le deuxième module lumineux (2) comprennent respectivement une pluralité de diodes électroluminescentes (3, 14),
- **que** pour fournir une fonction de feu arrière, les diodes électroluminescentes à la fois du premier et du deuxième module lumineux peuvent être commandées de telle sorte qu'elles éclairent avec une intensité lumineuse dans une plage de 5 % à 20 % de l'intensité lumineuse maximale des diodes électroluminescentes, et
- **que** pour fournir une fonction de feu stop, les diodes électroluminescentes du premier module lumineux peuvent être commandées de telle sorte qu'elles éclairent avec une intensité lumineuse dans une plage de 60 % à 100 % inclus de l'intensité lumineuse maximale des diodes électroluminescentes.

2. Dispositif d'éclairage selon la revendication 1, **caractérisé en ce que** le deuxième module lumineux (2) est formé par un anneau qui entoure le premier module lumineux (1).

3. Dispositif d'éclairage selon l'une des revendications précédentes, **caractérisé en ce qu'**un réflecteur est associé à chaque diode électroluminescente (3, 14) et **en ce que** les réflecteurs du module lumineux (1, 2) remplissent celui-ci de telle sorte qu'il ne se produit aucune surface morte (22) du point de vue de la technique d'éclairage.

4. Dispositif d'éclairage selon l'une des revendications précédentes, **caractérisé en ce que** le deuxième module lumineux (2) fournit un feu clignotant en tant qu'indicateur de changement de direction, les diodes électroluminescentes (14) du premier et du deuxième module lumineux (1, 2) pouvant être commandés de telle sorte que l'intensité lumineuse du feu arrière est égale à 5 % et celle du feu stop à 60 % ou, lorsqu'un feu antibrouillard arrière est allumé, à 90 % de l'intensité lumineuse maximale des diodes électroluminescentes.

5. Dispositif d'éclairage selon l'une des revendications précédentes, **caractérisé en ce que** le deuxième module lumineux (2) est divisé et fournit différentes fonctions lumineuses.

6. Dispositif d'éclairage selon la revendication 5, **caractérisé en ce que** le deuxième module lumineux (2) fournit dans une zone (12) un feu arrière et un feu stop et, dans une autre zone (13), un feu antibrouillard arrière.
